**Europäisches Patentamt**

**European Patent Office**

**Office européen des brevets**

(19)

(11) Veröffentlichungsnummer: **0 193 838**
**B1**

(12) # EUROPÄISCHE PATENTSCHRIFT

(45) Veröffentlichungstag der Patentschrift:
03.05.89

(51) Int. Cl.⁴: **F 23 D 17/00,** F 23 D 14/02,
F 23 C 7/00, F 23 L 7/00

(21) Anmeldenummer: **86102394.3**

(22) Anmeldetag: **24.02.86**

(54) **Brenneranordnung für Feuerungsanlagen, insbesondere für Brennkammern von Gasturbinenanlagen sowie Verfahren zu ihrem Betrieb.**

(30) Priorität: **04.03.85 DE 3507516**

(43) Veröffentlichungstag der Anmeldung:
**10.09.86 Patentblatt 86/37**

(45) Bekanntmachung des Hinweises auf die Patenterteilung:
**03.05.89 Patentblatt 89/18**

(84) Benannte Vertragsstaaten:
**AT CH DE LI NL**

(56) Entgegenhaltungen:
**DE-C- 953 551**
**US-A- 3 076 497**
**US-A- 4 347 052**

(73) Patentinhaber: **Siemens Aktiengesellschaft, Berlin und München Wittelsbacherplatz 2, D-8000 München 2 (DE)**

(72) Erfinder: **Maghon, Helmut, Stockweg 61,
D-4330 Mülheim/Ruhr (DE)**
Erfinder: **Becker, Bernard, Dr., Lothringer Weg 2 N,
D-4330 Mülheim/Ruhr (DE)**

## Beschreibung

Die Erfindung bezieht sich auf eine Brenneranordnung für Feuerungsanlagen, insbesondere von Gasturbinenanlagen, wobei eine Brennkammer ein etwa zylindrisches Gehäuse und ein darin mit Ringspalt wärmebeweglich und zentrisch gehaltenes Flammrohr aufweist, gemäß dem Oberbegriff des Anspruchs 1.

Derartige Brenneranordnungen müssen eine Reihe von Anforderungen erfüllen, damit ihr Betrieb auch unter Berücksichtigung verschärfter Umweltschutzbestimmungen gewährleistet ist: So darf der Gehalt an $NO_x$ im Abgas obere Grenzwerte nicht überschreiten. Das bedeutet, daß die Temperaturen in den Verbrennungszonen nicht zu hoch sein dürfen und ausreichende Mengen von Verbrennungsluft der Verbrennungszone zugeleitet werden, wobei im allgemeinen ein Luftüberschuß aufrechterhalten wird. Die Brenner sollen nicht nur mit Heizöl, sondern auch mit Erdgas betrieben werden können.

Ein besonderes Problem ist auch die Umrüstung von Brenneranordnungen, die zwar jetzigen, jedoch zukünftigen $NO_x$-Grenzwerten nicht mehr genügen. Ausgehend von einer Brenneranordnung der im Gattungsbegriff definierten Art, liegt der Erfindung die Aufgabe zugrunde, diese so auszugestalten, daß sie im Sinne der aufgezeigten Anforderungen einen Betrieb mit niedrigen $NO_x$-Gehalten im Abgas gewährleisten, wobei eine Nachrüstung auch bestehender Brenneranordnungen im Sinne der Reduzierung der $NO_x$-Abgaswerte ermöglicht sein soll, ohne daß die gesamte Brennereinrichtung ausgewechselt werden müßte.

Eine weitere Aufgabe der Erfindung ist ein geeignetes Verfahren zum Betrieb der Brenneranordnung, welches eine möglichst geringe Erzeugung von $NO_x$ bewirkt.

Erfindungsgemäß wird die gestellte Aufgabe mit den im Kennzeichen des Anspruchs 1 angegebenen Merkmalen gelöst. Vorteilhafte Weiterbildungen sind in den Ansprüchen 2 bis 15 angegeben.

Die mit der Erfindung erzielbaren Vorteile sind unter anderem darin zu sehen, daß das ohnehin vorhandene Ringkanalsystem mit seinen Strömungsleitwänden als Träger einer Vormischbrenner-Anordnung ausgebildet ist, wodurch eine Nachrüstung bestehender Brenneranordnungen ermöglicht ist. Die vorgeschlagenen Verfahren zum Betrieb einer nachgerüsteten Brenneranordnung, wie sie in den Ansprüchen 9 bis 13 angegeben sind, ermöglichen eine Betriebsweise, bei der der $NO_x$-Ausstoß minimiert wird, ohne daß dabei der Verbrauch von Zusatzstoffen, insb. van Wasser, übermäßig ansteigt. Dabei wird von der Erkenntnis ausgegangen, daß ohne geeignete Gegenmaßnahmen der weitaus größte Teil der $NO_x$-Erzeugung in der Pilotflamme des Pilotbrenners stattfindet, obwohl der Brennstoffanteil dieser Flamme nur etwa 5 bis 10% der gesamten Brenneranordnung beträgt. Eine entscheidende Minderung des $NO_x$-Ausstoßes kann daher schon durch geeignete Beeinflussung der Pilotflamme erreicht werden. Die dabei z.B. verbrauchten Mengen, beispielsweise an Wasser oder Wasserdampf in der Größenordnung von etwa 100% der Brennstoffmenge des Pilotbrenners, sind noch verhältnismäßig gering.

Weitere Möglichkeiten zur Beeinflussung der Pilotflamme sind in den Ansprüchen 14 bis 16 angegeben. Die Verlegungen der Gaseinlässe in den ursprünglich der Luftzuführung dienenden Kanal ermöglicht einen Betrieb des Pilotbrenners quasi als Vormischbrenner. Dabei kann durch lastabhängige Veränderung des Verhältnisses von Brennstoff zu Luft die Stabilität der Pilotflamme und damit der gesamten Brennerflamme erhalten werden. In Bereichen, in denen die Brennerflamme ohnehin stabil brennt ($\lambda = 1,8 \pm 0,4$), kann die Pilotflamme mit einem solchen Verhältnis von Brennstoff zu Luft betrieben werden. Bei Verringerung der Gesamtlast, d.h. bei abnehmender Gesamtbrennstoffmenge, muß der Brennstoffanteil in der Pilotflamme erhöht werden (z.B. auf $\lambda = 1,4 \pm 0,4$). Diese gezielte Inhomogenität stabilisiert die gesamte Flammenkonfiguration des Brenners. Der Vorteil dieser Vorgehensweise liegt in einer Absenkung der $NO_x$-Emission in der Nähe des Auslegungspunktes durch verringerung der $NO_x$-Erzeugung in der Pilotflamme und in einer Ausweitung des Arbeitsbereiches der Brenneranordnung in Richtung kleinerer Luftzahlen. Im Teillastbereich kann durch zusätzliche Wasser- oder Dampfzumischung die $NO_x$-Emission trotz der inhomogenisierung des Gemischfeldes niedrig gehalten werden. Wichtig dabei ist, daß die zugemischten Inertstoffe möglichst vollständig in der Pilotflamme vorhanden sind. In der Nähe des Auslegungsbereiches, d.h. im bevorzugten Betriebsbereich der Anordnung, kann auf eine Zumischung von Inertstoffen im allgemeinen verzichtet werden.

Weitere Merkmale und Vorteile des Erfindungsgegenstandes gehen aus der nachstehenden Figurenbeschreibung hervor, in welcher Ausführungsbeispiele der Erfindung anhand der Zeichnung erläutert werden.

Fig. 1 in einem Axialschnitt eine Brenneranordnung nach der Erfindung unter Fortlassung der für das Verständnis der Erfindung nicht erforderlichen Teile des Brenners und der Brennerkammer;

Fig. 2 ein Diagramm, in welchem Beispielsweise der $NO_x$-Gehält in $mg/m^3$ (Ordinatenachse) in Abhängigkeit von der Gasturbinen-Eintrittstemperatur $\vartheta_{TI}$ der Verbrennungsgase (Abszissenachse) aufgetragen ist;

Fig. 3 einen vergrößerten schematischen Ausschnitt aus Fig. 1 zur Verdeutlichung der Anordnung von Gaseinlässen in den Luftzuführungskanal des Pilotbrenners;

Fig. 4 eine andere Ausbildungsform der Gaseinlässe aus Fig. 3.

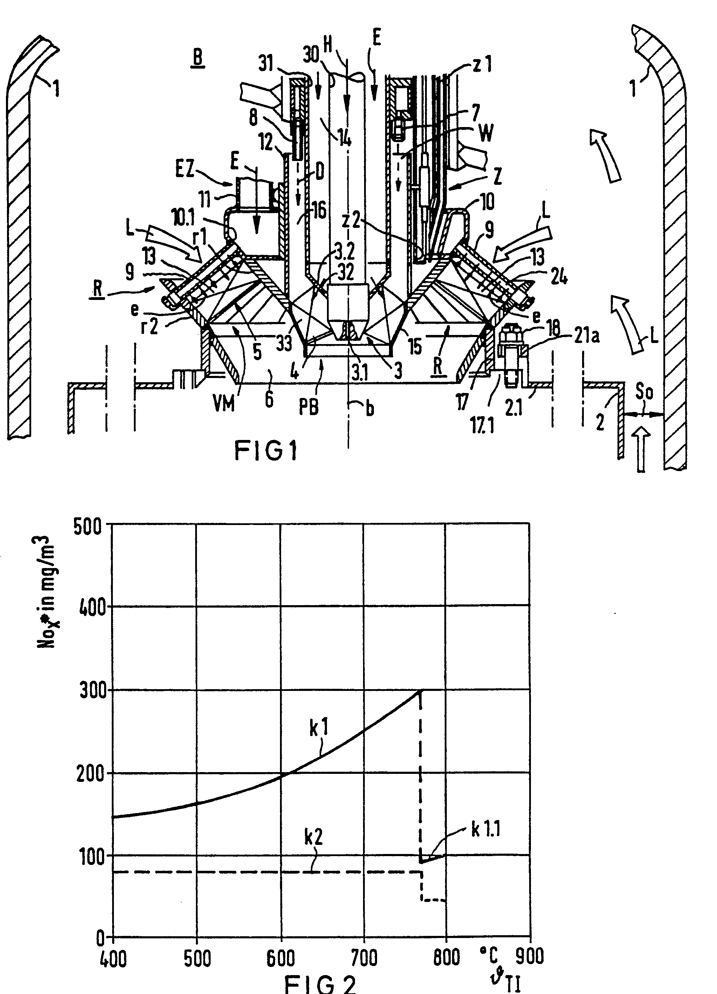

Die in Fig. 1 dargestellte Brenneranordnung B gehört zu einer Gasturbinenanlage, dem bevorzugten Anwendungsgebiet der Erfindung. Die Brenneranordnung B ist indessen auch für gasbefeuerte Feuerungsanlagen von Kesseln geeignet. Die zugehörige Brennkammer BK weist ein — im Ausschnitt dargestelltes — etwa zylindrisches Gehäuse 1 auf und ein darin mit Ringspalt $s_0$ wärmebeweglich und zentrisch gehaltetes Flammrohr 2. Das Gehäuse 1 ist nicht maßstabsgerecht und lediglich schematisch eingezeichnet, und das Beispiel ist auf die dargestellte Brenneranordnung B mit einem einzigen Brenner nicht beschränkt; in aller Regel weist die Brennkammer BK sechs in hexagonaler Anordnung oder acht in oktogonaler Anordnung vorgesehene Brenner auf.

Jede der eizelnen Brenneranordnung B besteht aus wenigstens einem Pilotbrenner PB, welcher mit den Brennstoffdüsen 3.1, 3.2 sowie außerdem der Drallbeschaufelung 4 seines Brennerkopfes 3 im Stirnbereich des Flammrohres 2 angeordnet ist und der mit Erdgas E und/oder Heizöl H als Brennstoff betreibbar ist. Der Kopf 3 des Pilotbrenners PB ist koaxial — bezogen auf die Brennerachse b — umgeben von einem Ringkanalsystem R mit inneren und äußeren Strömungsleitwänden r1 und r2, wodurch ein ringförmiger Kanalquerschnitt 5 gebildet wird, welcher der Zufuhr des Hauptanteils der Verbrennungsluft L aus dem Ringspalt $s_0$ zu der stromab des Brennerkopfes 3 sich ausbildenden Verbrennungszone (nicht dargestellt) dient. Dem Ringspalt wird die unter Druck stehende Verbrennungsluft L vom Kompressor der Gasturbine zugeführt; die heißen Brenngase strömen in die Turbinen-Beschaufelung.

Die Verbrennungsluft L, ggf. mit beigemischtem Erdgas, die aus dem ringförmigen Kanalquerschnitt 5 in den stromab des Brennerkopfes 3 angeordneten Kreisquerschnitt 6 übertritt, führt zusammen mit der durch den Brennerkoaxialen Ringraum 16 eintretenden Luft zu einem Drallfeld mit Rezirkulationsgebiet im Flammenbereich. Wichtig ist, daß die örtliche Geschwindigkeit in der sich ausbildenden Drehströmung groß genug ist, die Verbrennungsluft mit dem Flammenkegel des eingespritzten, fein zerstäubten Heizöls H bzw. des eingeblasenen Erdgases E innig zu vermischen, so daß im Zusammenwirken mit der Brennstoffzufuhr der Pilotflamme die Aufenthaltszeit des Reaktionsgemisches im Bereich stöchiometrischer Bedingungen minimiert wird, wodurch der kleinstmögliche $NO_x$-Gehalt gewährleistet wird. Dieser kann durch Einspritzen von Wasser W aus Wasserdüsen 7 oder Dampf D aus Dampfdüsen 8, wie gestrichelt angedeutet, weiter verringert werden. Besonders vorteilhaft ist es, wenn diese Inertstoffe besonders auch in der Pilotflamme vorhanden sind, da dort sonst das meiste $NO_x$ entsteht. Die erfindungsgemäße Anordnung der Düsen 7, 8 ermöglicht dies.

Erfindungsgemäß ist ferner das Ringkanalsystem R mit seinen Strömungsleitwänden r1, r2 als Vormischbrenner-Anordnung VM zur Verbrennung von Erdgas E ausgebildet. Hierzu ist der Zuströmquerschnitt 5 (auch als Kanalquerschnitt bezeichnet) des zum Ringspalt $s_0$ offenen Ringkanalsystems R von einer Mehrzahl von etwa quer zur Luftströmung L gerichteten Düsenrohren durchdrungen. Die Düsenrohre 9 sind mit ihren der inneren Strömungsleitwand r1 zugewandten Enden an ein Erdgas-Zuleitungssystem EZ angeschlossen, welches den Pilotbrenner PB etwa konzentrisch umgibt. Die Düsenöffnungen der Düsenrohre 9 sind, wie es die kleinen Erdgas-Strömungspfeile e verdeutlichen, auf der der Luftzuströmseite des Ringkanalsystems R abgewandten Seite der Düsenrohre 9 angeordnet. Jedes der über den ringförmigen Kanalquerschnitt 5 verteilten Düsenrohre, die im Vergleich zu den Rohrabmessungen des Diffusionsbrenners DB auch als «Röhrchen» zu bezeichnen wären, hat 5 Düsenöffnungen, der Kranz der Düsenrohre 9 umfaßt im Beispiel 24 «Röhrchen», die jedoch noch genügend Zuströmquerschnitt für die Verbrennungsluft L freilassen. Der Röhrchenkranz wirkt wie eine Ergasdusche, die zu einer optimalen Vermischung mit der Verbrennungsluft L beiträgt.

Das Erdgas-Zuleitungssystem für den Vormischbrenner VM weist eine ringförmige Einlaufkammer 10 auf mit einer zur Achse b des Pilotbrenners PB kegelig abgeschrägten Anschlußwand 10.1 für die Düsenrohre 9. Die Einlaufkammer 10 läuft schneckenartig von einem größeren, an die Erdgasspeiseleitung 11 angeschlossenen Anfangsquerschnitt (linke Hälfte der Fig. 1) bis hin zu einem kleineren Endquerschnitt (rechte Hälfte der Fig. 1) stetig verjüngt zu, wobei an den Endquerschnitt die letzten der zu beaufschlagenden Düsenrohre 9 des Düsenrohrkranzes angeschlossen sind, so daß die Strömungsgeschwindigkeit der Verbrennungsluft an allen Düsenöffnungen in etwa gleich ist.

Das Ringkanalsystem R ist von den schon erwähnten inneren und äußeren Strömungsleitwänden r1, r2 begrenzt, welche zumindest angenähert auf je einem Kegelmantel liegen, deren Kegelachsen mit der Achse b des Pilotbrenners PB zusammenfallen. Sie sind zur Bildung des ringförmigen Kanalquerschnittes 5 in Richtung der Pilotbrennerachse axial gegeneinander versetzt. Die kegelig abgeschrägte Anschlußwand 10.1 der Einlaufkammer 10 ist mit der inneren kegeligen Strömungsleitwand r1 gleichgerichtet und fällt, wie man erkennt, mit dieser teilweise zusammen. Besonders raumsparend und strömungsgünstig ist es, wenn die Einlaufkammer 10 — wie dargestellt — in der Ringnische angeordnet ist, welche von einer den Pilotbrenner PB umgebenden Zylinderwand 12 und der inneren Strömungsleitwand r1 aufgespannt ist.

Der dem Vormischbrenner VM zuströmenden Verbrennungsluft L wird ihre Drallkomponente durch die Drallbeschaufelung 13 aufgedrückt, welche den Düsenrohren 9 nachgeschaltet ist und deren Leitschaufellängsachsen etwa parallel zu den Düsenrohrachsen verlaufen.

Der Pilotbrenner PB wird in seiner Funktion durch den Vormischbrenner VM ergänzt, d.h. bei Erdgasbetrieb kann nach den Anfahren und Anwärmen vom Pilotbrenner- auf Vormischbrennerbetrieb umgeschaltet werden mit seinen niedrigeren $NO_x$-Werten. Die Zündung des Pilotbrenners PB erfolgt mit seinem Zündbrenner Z, der hierzu ein Gasröhrchen z1 und eine stab- oder rohrförmige Elektrodenanordnung z2 aufweist. Dieser Zündbrenner Z erlischt, wenn am Brennerkopf stromab desselben eine dauerhafte Flamme brennt; die Zündung des Vormischbrenners VM erfolgt durch die Flamme des Pilotbrenners PB. Ein Zurückschlagen der Flamme kann, auch ohne Flammehalter, in den Vormischbrennerbereich nicht eintreten, wenn auf ausreichende Luftgeschwindigkeit geachtet wird. — Das zentrale Rohr 30 des Pilotbrenners PB dient der Zufuhr von Heizöl H, mit einem ersten, das zentrale Brennerrohr umgebenden Mantel 31 wird ein Ringraum 14 zur Einspeisung von Erdgas E gebildet. Dieser Ringraum 14 mündet im Bereich des Brennerkopfes 3 über eine kegelige Düsenwand 32 in den Strömungsraum 33 des brennerkopfseitigen Drallsterns 4, der mit seinen Leitschaufeln zwischen der inneren Düsenwand 32 und einer äußeren Kegelschürze 15 gehalten ist. Letztere ist am Rand der Kegelstumpföffnung der inneren Strömungsleitwand r1 befestigt. Der konzentrisch den ersten Brennermantel 31 umgebende zweite Brennermantel ist die äußere Zylinderwand 12, welche einen zweiten brenner-koaxialen Ringraum 16 bildet. Dieser endet gleichfalls im Strömungsraum des brennerkopfseitigen Drallsterns 4 und dient der Zufuhr von Luft zur Pilotflamme und ggf. zur Einspeisung von Wasser W über Düsen 7 oder von Wasserdampf D über Düsen 8, wie bereits erläutert. Die gesamte Brennereinheit PB/VM ist an ihrem unteren Ende an einem Flansch 2.1a der Stirnwand 2.1 des Flammrohres 2 mittels eines Rohrstutzens 17 mit Flansch 17.1 befestigt. Der Rohrstutzen 17 ist an der äußeren Strömungsleitwand r2 festgeschweißt. Die Flanschschrauben sind mit 18 bezeichnet.

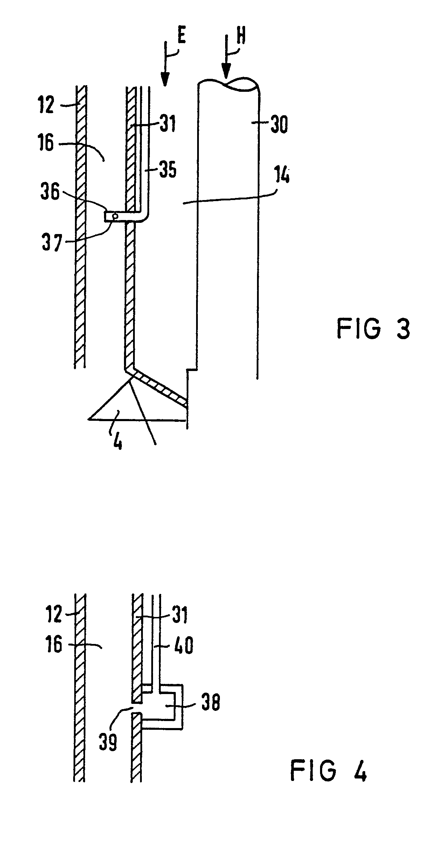

Im Diagramm der Fig. 2 zeigt die obere Kurve k1 den $NO_x$-Ausstoß im trockenen Abgas bei 15 Vol. % $O_2$ bei Betrieb des Hybridbrenners ohne $H_2O$-Einspritzung und ohne eingeschalteten Vormischbrenner VM anhängig von der Temperatur $\vartheta_{TI}$, der Gasturbinen-Eintrittstemperatur des Arbeitsmediums. Kurve k1.1 zeigt den steilen Abfall des $NO_x$-Ausstoßes bei Übergang auf Vormischbrennerbetrieb, Kurve k2 die weitere Reduzierung des $NO_x$ Gehaltes im Abgas bei Betrieb des Hybridbrenners mit $H_2O$-Einspritzung.

Fig. 3 zeigt schematisch eine Ausführungsmöglichkeit für eine Umlegung der Gaseinlässe 36 zum Pilotbrenner PB in den zweiten brenner-koaxialen, sonst der Luftzuführung dienenden Ringraum 16 zur lastabhängigen Änderung des Brennstoff-Luft-Gemisches. Durch eine zusätzliche, gesondert gespeiste und gesteuerte Rohrleitung 35, welche durch die innere Wandung 31 des zweiten Ringraumes 16 geführt ist, kann das Gas nunmehr in diesem Ringraum 16 eingespeist werden. Geeignete, vorzugsweise senkrecht zur sonstigen Luftströmung in diesem Ringraum 16 liegende Auslaßöffnungen 37 ermöglichen eine gute Vermischung. Auf diese Weise wird der Pilotbrenner PB nicht mehr als Diffusionsbrenner, sondern quasi als gesondert geregelter Vormischbrenner betrieben. Grundsätzlich ist es von untergeordneter Bedeutung, auf welchem Wege die zusätzliche Luft zugeführt wird, so daß für die Verlegung des Rohrleitung 35 und der Gasauslässe 36, von denen mehrere über den Umfang verteilt sind, viele Möglichkeiten bestehen.

In Fig. 4 wird daher beispielhaft eine andere Variante der Gaseinlässe schematisch dargestellt. Konzentrisch zu dem zweiten Ringraum 16 ist ein Ringkanal 38 angeordnet, welcher mehrere Bohrungen 39 durch die Wandung 31 des zweiten Ringraumes 16 über den Umfang verteilt aufweist. Der Ringkanal 38 wird durch eine Rohleitung 40 lastabhängig mit Luft gespeist.

## Patentansprüche

1. Brenneranordnung (B) für Feuerungsanlagen, insbesondere von Gasturbinenanlagen, wobei eine Brennkammer (BK) ein etwa zylindrisches Gehäuse (1) und ein darin mit Ringspalt ($S_0$) wärmebeweglich und zentrisch gehaltertes Flammrohr (2) aufweist; dabei besteht die Brenneranordnung (B) aus wenigstens einem eine Pilotflamme erzeugenden Pilotbrenner (PB), welcher im Stirnbereich des Flammrohres (2) angeordnet und der mit Erdgas (E) und/oder Heizöl (H) als Brennstoff betreibbar ist und einen Luftzuführungskanal (16) aufweist, und aus einem den Kopf (3) des Pilotbrenners (PB) umgebenden Ringkanalsystem (R) mit Strömungsleitwänden (r1, r2) zur Zufuhr des Hauptanteils der Verbrennungsluft aus dem Ringspalt ($S_0$) zu der stromab des Brennerkopfes (3) im Flammrohr (2) sich ausbildenden Verbrennungszone, wobei eine Drallbeschaufelung (13) im Ringkanalsystem (R) vorhanden ist, durch die den Strömungsvektoren der Verbrennungsluft Komponenten aufprägbar sind, die zur Brennerachse (b) parallel bis spitzwinklig gerichtet in die Verbrennungzone einmünden und denen tangential gerichtete Drallkomponenten mit der Brennerachse (b) als Drallzentrum überlagert sind, dadurch gekennzeichnet,

— daß das Ringkanalsystem (R) mit seinen Strömungsleitwänden (r1, r2) als Vormischbrenner-Anordnung (VM) zur Verbrennung von Erdgas (E) ausgebildet ist,

— daß hierzu der Zuströmquerschnitt (5) des zum Ringspalt /$S_0$) offenen Ringkanalsystems (R) von einer Mehrzahl von etwa quer zur Luftströmung (L) gerichteten Düsenrohren (9) durchdrungen ist,

— daß die Düsenrohre (9) mit ihren einen Enden an ein Erdgas-Zuleitungssystem (EZ) angeschlossen sind, welches den Pilotbrenner (PB) etwa konzentrisch umgibt,

— und daß die Düsenöffnungen der Düsenrohre (9) auf der der Luftzuströmseite des Ringkanalsystems (R) abgewandten Seite der Düsenrohre (9) angeordnet sind.

2. Brenneranordnung nach Anspruch 1, dadurch gekennzeichnet, daß das Redgas-Zuleitungs-System (EZ) eine ringförmige Einlaufkammer (10) aufweist mit einer zur Achse (b) des Pilotbrenners (PB) kegelig abgeschrägten Anschlußwand (10.1) für die Düsenrohre (9).

3. Brenneranordnung nach Anspruch 2, dadurch gekennzeichnet, daß das Ringkanalsystem (R) von inneren und äußeren Strömungsleitwänden (r1, r2) begrenzt ist, welche zumindest angenähert auf je einem Kegelmantel liegen, derenm kegelachsen mit der Achse (b) des Pilotbrenners (PB) zusammenfallen und die in Richtung der Pilotbrennerachse gegeneinander axial versetzt sind, und daß die kegelig abgeschrägte Anschlußwand (10.1) der Einlaufkammer (10) mit der inneren kegeligen Strömungsleitwand (r1) gleichgerichtet ist bzw. mit dieser mindestens teilweise zusammenfällt.

4. Brenneranordnung nach Anspruch 3, dadurch gekennzeichnet, daß die Einlaufkammer (10) in der Ringnische angeordnet ist, welche von einer den Pilotbrenner (PB) koaxial umgebenden Zylinderwand (12) und der innere Strömungsleitwand (r1) aufgespannt ist.

5. Brenneranordnung nach einem der Ansprüche 1 bis 4, dadurch gekennzeichnet, daß die Drallbeschaufelung (13) den Düsenrohren (9) nachgeschaltet ist, wobei die Schaufellängsachsen etwa parallel zu den Düsenrohrachsen verlaufen.

6. Brenneranordnung nach einem der Ansprüche 1 bis 5, dadurch gekennzeichnet, daß der Pilotbrenner (PB) mit seinem der Zufuhr von Heizöl (H) dienenden zentralen Brennerrohr (30) einen ersten, das Brennerrohr umgebenden Brennermantel (31) aufweist mit einem Ringraum (14) zur Einspeisung von Erdgas (E), der im Bereich des Brennerkopfes (3) über eine Düsenwand (32) in den Strömungsraum (33) eines brennerkopfseitigen Drallsterns (4) mündet und einen zweiten Brennermantel in Form der äußeren Zylinderwand (12) aufweist, welcher einen zweiten brenner-koaxialen Ringraum, den Luftzuführungskanal (16) des Pilotbrenners (PB) bildet, der gleichfalls im Strömungsraum (33) des brennerkopfseitigen Drallsternes (4) endet und der Zufuhr von Luft dient, sowie Öffnungen (7 bzw. 8) zur Einspeisung eines Inertstoffes, vorzugsweise von Wasser (W) oder Wasserdampf (D) in die Verbrennungszone, aufweist.

7. Brenneranordnung nach einem der Ansprüche 2 bis 4, dadurch gekennzeichnet, daß die Einlaufkammer (10) schneckenartig von einem größeren, an die Erdgasspeiseleitung (11) angeschlossenen Anfangsquerschnitt bis hin zu einem kleineren Endquerschnitt stetig verjüngt zuläuft, wobei an den Endquerschnitt der Einlaufkammer (10) die letzten der beaufschlagenden Düsenrohre (9) des Düsenrohrkranzes angeschlossen sind.

8. Brenneranordnung nach einem der vorhergehenden Ansprüche, dadurch gekennzeichnet, daß zur Gaszufuhr für den Pilotbrenner (PB) mehrere über den Umfang verteilte, gesondert gespeiste und gesteuerte Gaseinlässe (37; 39), in dessen Luftzuführungskanal (16) stromaufwärts mit Abstand vom Drallstern (4) vorhanden sind.

9. Brenneranordnung nach Anspruch 8, dadurch gekennzeichnet, daß die Gaseinlässe (37; 39) aus mehreren über den Umfang verteilten, durch die Wandung (12 oder 31) des Luftzuführungskanals (16) geführten Rohren (35) bestehen.

10. Brenneranordnung nach Anspruch (9), dadurch gekennzeichnet, daß die Rohre (35) ein Stück (36) in den Luftzuführungskanal (16) hineinragen.

11. Brenneranordnung nach Anspruch 10, dadurch gekennzeichnet, daß die Rohrstücke (36) innerhalb des Luftzuführungskanals (16) mehrere Gasaustrittsöffnungen (37), vorzugsweise etwa senkrecht zur Luftströmungsrichtung, aufweisen.

12. Brenneranordnung nach Anspruch 8, dadurch gekennzeichnet, daß die Gaseinlässe (34) als Bohrungen (39) durch die Wandung (12 oder 31) eines konzentrisch zum Luftzuführungskanal (16) angeordneten Ringkanales (38) ausgebildet sind, der eine gesonderte Gaszuleitung (40) aufweist.

13. Verfahren zum Betrieb einer Brenneranordnung gemäß dem Anspruch 1 bis 12, dadurch gekennzeichnet, daß beim Betrieb in der Nähe des Auslegungspunktes eine Menge Wasser (W) oder Wasserdampf (D), zwischen 50% und 120% der Brennstoffmenge des Pilotbrenners (PB), vorzugsweise 100% eingespeist wird, und zwar so, daß ein möglichst größer Anteil davon in der Flamme des Pilotbrenners (PB) vorhanden ist.

14. Verfahren zum Betrieb einer Brenneranordnung gemäß einem der Ansprüche 8 bis 12, dadurch gekennzeichnet, daß das Verhältnis von Brennstoff zu Luft am Pilotbrenner (PB) lastabhängig verändert wird, indem die Gaseinspeisung stromaufwärts mit Abstand vom Drallstern (4) in den Luftzuführungskanal (16) in Abhängigkeit von der Gesamtbrennstoffmenge verändert wird.

15. Verfahren nach Anspruch 14, dadurch gekennzeichnet, daß bei abnehmender Gesamtbrennstoffmenge zunehmend Gasmengen in den Luftführungskanal (16) eingespeist werden, um durch gezielte Inhomogenität die Flamme der ganzen Brenneranordnung zu stabilisieren, wobei der Pilotbrenner (PB) bei einer ungefähren Luftzahl von $\lambda = 1,4 \pm 0,4$ arbeitet.

16. Verfahren nach Anspruch 14, dadurch gekennzeichnet, daß in der Nähe des Auslegungspunktes die eingespeiste Gasmenge so eingestellt wird, daß sich am Austritt des Pilotbrenners (PB) ein etwa gleichförmiges Gemisch mit etwa der gleichen Luftzahl ($\lambda = 1,8 \pm 0,4$) wie in der äußeren Hauptströmung ergibt.

## Revendications

1. Agencement de brûleurs (B) pour des installations de combustion, notamment pour des installations à turbine à gaz, une chambre de combustion (BK) comportant une enveloppe (1) sensiblement cylindrique et dans celle-ci un tube-foyer (2) maintenu centré avec formation d'une fente annulaire (S0) et pouvant se déplacer sous l'effet de la chaleur; l'agencement de brûleurs (B) est constitué d'au moins un brûleur pilote (PB) qui produit une flamme pilote, qui est disposé dans la partie frontale du tube-foyer (2), qui peut fonctionner avec du gaz naturel (E) et/ou du mazout (H) comme combustible et qui comporte un canal d'amenée d'air (16) et d'un système à canal annulaire (R), qui entoure la tête (3) du brûleur pilote (PB), qui a des parois de guidage de l'écoulement (r1, r2) pour faire passer la partie principale de l'air de combustion de la fente annulaire (S0) à la zone de combustion se formant dans le tube-foyer (2) en aval de la tête du brûleur (3), et il est prévu dans le système à canal annulaire (R) un aubage à tourbillonnement par lequel on peut imprimer aux vecteurs d'écoulement de l'air de combustion des composantes qui débouchent dans la zone de combustion en étant dirigées parallèlement à l'axe du brûleur (6) ou en faisant un angle aigu avec celui-ci (b), et auxquelles sont superposées des composantes du tourbillonnement, dirigées tangentiellement, avec l'axe du brûleur (b) comme centre du tourbillonnement, caractérisé,

– en ce que le système à canal annulaire (R) est constitué avec ses parois de guidage de l'écoulement (r1, r2) en dispositif à brûleur de prémélange (VM) pour la combustion du gaz naturel (E);

– en ce que, à cet effet, la section transversale d'entrée (5) du système à canal annulaire (R), ouvert vers la fente annulaire (S0), est traversée par un grand nombre de tubes à tuyères (9), dirigés sensiblement perpendiculairement à l'écoulement de l'air (L);

– en ce que les tubes à tuyères (9) sont reliés par l'une de leurs extrémités un système d'amenée du gaz naturel (EZ), qui entoure concentriquement le brûleur pilote (PB);

– et en ce que les ouvertures des tuyères des tubes à tuyères (9) sont disposées du côté des tubes à tuyères (9), qui est éloigné du côté de l'arrivée de l'air du système à canal annulaire (R).

2. Agencement de brûleurs suivant la revendication 1, caractérisé en ce que le système d'amenée du gaz naturel (EZ) comporte une chambre d'entrée annulaire (10) ayant une paroi de raccordement (10.1) des tubes à tuyères (9), qui est inclinée coniquement par rapport à l'axe (b) du brûleurs pilote (PB).

3. Agencement de brûleurs suivant la revendication 2, caractérisé en ce que le système à canal annulaire (R) est délimité par des parois de guidage de l'écoulement intérieures et extérieures (r1, r2) qui se trouvent chacune au moins approximativement sur une surface latérale conique dont les axes coïncident avec l'axe (b) du brûleur pilote (PB) et qui sont décalées axialement l'une par rapport à l'autre dans la direction de l'axe du brûleur pilote et en ce que la paroi de raccordement (10.1) biseautée coniquement, de la chambre d'entrée (10) présente la même direction que la paroi intérieure de guidage de l'écoulement (r1) en forme de cône ou coïncide au moins partiellement avec celle-ci.

4. Agencement de brûleurs suivant la revendication 3, caractérisé en ce que la chambre d'entrée (10) est disposée dans la niche annulaire qui est définie par une paroi cylindrique (12) entourant coaxialement le brûleur pilote (PB) et par la paroi intérieure de guidage de l'écoulement (r1).

5. Agencement de brûleurs suivant l'une des revendications 1 à 4, caractérisé en ce que l'aubage à tourbillonnement (13) est monté en aval des tubes à tuyères (9), les axes longitudinaux des aubes s'étendant à peu près parallèlement aux axes des tubes à tuyères.

6. Agencement de brûleurs suivant l'une des revendications 1 à 5, caractérisé en ce que le brûleur pilote (PB), avec son tube central de brûleur (30) servant à l'arrivée du mazout (H), comporte une première enveloppe de brûleur (31) entourant le tube de brûleur avec une chambre annulaire d'alimentation en gaz naturel (E), qui débouche dans la région de la tête du brûleur (3) par l'intermédiaire d'une paroi formant tuyère (32) dans la chambre d'écoulement (33) d'une étoile de tourbillonnement (4) se trouvant du côté de la tête du brûleur, ainsi qu'une seconde enveloppe de brûleur de la forme de la paroi cylindrique extérieure (12) et qui forme une seconde chambre annulaire coaxiale au brûleur, qui constitue le canal d'alimentation en air (16) du brûleur pilote (PB), qui se termine également dans la chambre d'écoulement (33) de l'étoile du tourbillonnement (4) du côté de la tête du brûleur et qui sert à amener de l'air, et des ouvertures (7 et 8) d'alimentation en une substance inerte, de préférence l'eau (W) ou de la vapeur d'eau (D), de la zone de combustion.

7. Agencement de brûleurs suivant l'une des revendications 2 à 4, caractérisé en ce que la chambre d'entrée (10) s'amincie de façon continue et héli-coïdalement d'une section transversale initiale assez grande raccordée au conduit d'alimentation en gaz naturel (11) jusqu'à une section d'extrémité plus petite, les derniers des tubes à tuyères (9) de la couronne de tubes à tuyères, qui procèdent à l'alimentation, étant raccordés à la section transversale d'extrémité de la chambre d'entrée (10).

8. Agencement de brûleurs suivant l'une des revendications précédentes, caractérisé en ce que, pour amener du gaz au brûleur pilote (PB), il est prévu, dans son canal d'amenée de l'air (16), en amont et à distance de l'étoile de tourbillonnement (4), plusieurs entrées de gaz (37; 39), qui sont réparties sur le pourtour, et qui sont alimentées et commandées séparément.

9. Agencement de brûleurs suivant la revendication 8, caractérisé en ce que les entrées de gaz (37; 39) sont constituées de plusieurs tubes (35) qui sont répartis sur le pourtour et qui passent à travers la paroi (12 ou 31) du canal d'amenée de l'air (16).

10. Agencement de brûleurs suivant la revendication 9, caractérisé en ce que les tubes (35) font saillie un peu (36) dans le canal d'amenée de l'air (16).

11. Agencement de brûleurs suivant la revendication 10, caractérisé en ce que les tronçons tubulaires (36) situés dans le canal d'amenée de l'air (16) comportent plusieurs orifices de sortie du gaz (37), de préférence sensiblement perpendiculaires à la direction d'écoulement de l'air.

12. Agencement de brûleurs suivant la revendication 8, caractérisé en ce que les entrées de gaz (34) sont constituées en perçages (39) ménagés dans la paroi (12 ou 31) d'un canal annulaire (38) disposé concentriquement au canal d'amenée de l'air (16) et comportant un conduit distinct d'amenée du gaz (40).

13. Procédé pour la mise en œuvre d'un agencement de brûleurs suivant l'une des revendications 1 à 12, caractérisé en ce qu'il consiste, lors du fonctionnement à proximité du point nominal, à envoyer une certaine quantité d'eau (W) ou de vapeur d'au (D), comprise entre 50% et 120% de préférence égale à 100% de la quantité de combustible du brûleur pilote (PB) et cela de façon à en avoir une proportion aussi grande que possible dans la flamme du brûleur pilote (PB).

14. Procédé pour la mise en œuvre d'un agencement de brûleurs suivant l'une des revendications 8 à 12, caractérisé en ce qu'il consiste à modifier en fonction de la charge le rapport entre le combustible et l'air dans le brûleur pilote (PB), en modifiant l'alimentation en gaz du canal d'amenée de l'air (16), en amont et à distance de l'étoile du tourbillonnement (4) en fonction de la quantité totale de combustible.

15. procédé suivant la revendication 14, caractérisé en ce qu'il consiste à alimenter le canal d'amenée de l'air (16) en des quantités croissantes de gaz, lorsque la quantité totale de combustible diminue, afin de stabiliser l'ensemble de l'agencement des brûleurs en rendant la flamme inhomogène de manière adéquate, le brûleur pilote (PB) fonctionnant avec un indice d'air d'environ $\lambda = 1,4 \pm 0,4$.

16. Procédé suivant la revendication 14, caractérisé en ce qu'il consiste é régler la quantité de gaz d'alimentation, à proximité du point nominal, de manière à avoir à la sortie du brûleur pilote (PB) un mélange sensiblement uniforme ayant à peu près le même indice d'air ($\lambda$ = 1,8 ± 0,4) que dans l'écoulement extérieur principal.

## Claims

1. Burner arrangement (B) for furnaces, especially of gas turbine installations, whereby a combustion chamber (BK) has an approximately cylindrical housing (1) and a fire pipe (2) therein held centrally and able to be moved by heat transfer with an annular gap ($S_0$); the burner arrangement (B) consisting of at least one pilot burner (PB) producing a pilot flame, said burner being arranged in the front area of the fire pipe (2) and which is able to be driven by natural gas (E) and/or fuel oil (H) as fuel and has an air supply channel (16), and of an annular channel system (R) surrounding the head (3) of the pilot burner (PB) with flow guiding walls (r1, r2) for supply of the main portion of combustion air from the annular gap ($S_0$) to the combustion zone forming upstream of the burner head (3) in the fire pipe (2), whereby a twist blading (13) is present in the annular channel system (R), by which components are able to be impressed upon the flow vectors of the combustion air, which flow into the combustion zone, directed in a parallel to acute-angled manner to the burner axis (b) and are superimposed upon the tangentially directed twist components with the burner axis (b) as twist centre, characterised in

     − that the annular channel system (R) is constructed with its flow guiding walls (r1, r2) as premixing burner-arrangement (VM) for combustion of natural gas (E),

     − that for this purpose the flow cross-section (5) of the annular channel system (R) open to the annular gap ($S_0$) is penetrated by a plurality of nozzle tubes directed approximately transverse to the air flow (L),

     − that the nozzle tubes (9) are attached at one of their ends to a natural gas supply system (EZ), which surrounds the pilot burner (PB) approximately concentrically,

     − and that the nozzle openings of the nozzle tubes (9) are arranged on the side nozzle tubes (9) facing away from the air supply side of the annular channel system (R).

2. Burner arrangement according to claim 1, characterised in that the natural gas supply system (EZ) has an annular inlet chamber (10) with a connecting wall (10.1) for the nozzle tubes (9) angled in a tapering manner to the axis (b) of the pilot burner (PB).

3. Burner arrangement according to claim 2, characterised in that the annular channel system (R) of inner and outer flow guiding walls (r1, r2) is restricted, said walls lying at least approximately in each case on a cone shaped shell, the cone axes of which coincide with the axis (b) of the pilot burner (PB) and which are displaced axially against each other in the direction of the pilot burner axis, and that the connecting wall (10.1) of the inlet chamber (10) inclined in a tapering manner is equiaxial with the inner cone-shaped flow guiding wall (r1) or at least partly coincides with this.

4. Burner arrangement according to claim 3, characterised in that the inlet chamber (10) is arranged in the ring recess, which is set by a cylinder wall (12) coaxially surrounding the pilot burner (PB) and the inner flow guiding wall (r1).

5. Burner arrangement according to one of claims 1 to 4, characterised in that the twist blading (13) is downstream of the nozzle tubes (9) whereby the blade longitudinal axes extends approximately parallel to the nozzle tubes axes.

6. Burner arrangement according to one of claims 1 to 5, characterised in that the pilot burner (PB) has with its central burner pipe (30) serving the supply of fuel oil (H) a first burner shell (31) surrounding the burner pipe with an annular space (14) for feeding natural gas (E), which opens in the region of the burner head (3) by way of a nozzle wall (32) into the flow space (33) of a twist star (4) on the burner head side and a second burner shell in the form of the outer cylinder wall (12), which forms a second burner-coaxial annular space, the air supply channel (16) of the pilot burner (PB) which also terminates in the flow space (33) of the twist star (4) on the burner head side and serves the supply of air, as well as openings (7 or 8) for feeding an inert material, preferably of water (W) or water vapour (D) into the combustion zone.

7. Burner arrangement according to one of claims 2 to 4, characterised in that the inlet chamber (10) runs continually in a tapered manner helicoidally from a larger initial cross-section attached to the natural gas feeding line (11) up to a smaller end cross-section, whereby at the end cross-section of the inlet chamber (10) the last of the admitting nozzle tubes (9) of the nozzle tube ring is attached.

8. Burner arrangement according to one of the preceding claims, characterised in that for supplying gas for the pilot burner (PB) several separately fed and controlled gas inlets (37; 39), distributed over the circumference, in the air supply channel (16) thereof are present upstream at a distance from the twist star (4).

9. Burner arrangement according to claim 8, characterised in that the gas inlets (37; 39) consist of several tubes (35) distributed over the circumference and led through the wall (12 or 31) of the air supply channel (16).

10. Burner arrangement according to claim 9 characterised in that the tubes (35) project a portion (36) into the air supply channel (16).

11. Burner arrangement according to claim 10, characterised in that the tube portions (36) have, within the air supply channel (16) several gas outlet openings (37), preferably approximately perpendicular to the air flow direction.

12. Burner arrangement according to claim 8, characterised in that the gas inlets (34) are constructed as bores (39) through the wall (12 or 31) of an annular channel (38) arranged concentrically to the air supply channel, said channel having a separate gas line (40).

13. Method of operating a burner arrangement, according to one of claims 1 to 12, characterised in that when operating in the vicinity of the design point a quantity of water (W) or water vapour (D), between 50% and 120% of the amount of fuel of the pilot burner (PB), preferably 100%, is fed in so that a large portion as possible of this is present in the flame of the pilot burner (PB).

14. Method of operating a burner arrangement according to one of claims 8 to 12, characterised in that the ratio of fuel to air at the pilot burner (PB) is altered depending on the load, when the gas supply is altered upstream and distanced from the twist star (4) into the air supply channel (16), depending on the whole amount of fuel.

15. Method according to claim 14, characterised in that with a decreasing whole amount of fuel, increasingly amounts of gas are fed into the air supply channel (16), in order to stabilise the flame of the whole burner arrangement by controlled inhomogeneity, whereby the pilot burner (PB) functions with an approximate air count of $2 = 1.4 \pm 0.4$.

16. Method according to claim 14, characterised in that close to the design point the amount of gas fed in is adjusted such that at the outlet of the pilot burner (PB) there results an approximately even mix with approximately the same air coefficient ($2 = 1.8 \pm 0.4$) as in the outer main flow.

FIG 1

FIG 2

FIG 3

FIG 4